# EUROPEAN PATENT APPLICATION

(11) **EP 4 446 348 A1**
(43) Date of publication of application: **16.10.2024**
(21) Application number: 22904499.5
(22) Date of filing: 14.11.2022
(51) Int. Cl.: C08F 2/50, C08F 2/44, C08J 3/24, A61C 7/08, A61C 7/00, A61C 8/00, B33Y 10/00, B33Y 70/10, B33Y 80/00

(54) **COMPOSITION FOR FORMING INTRAORAL APPLIANCE, METHOD FOR MANUFACTURING INTRAORAL APPLIANCE, AND INTRAORAL APPLIANCE MANUFACTURED BY SAID METHOD**

(30) Priority: 08.12.2021 KR 20210175138
(71) Applicant: ODS. Co. Ltd, Incheon 21990 (KR)
(72) Inventor: PARK, Sungwon, Incheon 21986 (KR)
(74) Representative: Patentanwälte Ruff, Wilhelm, Beier, Dauster & Partner mbB
(86) International application number: PCT/KR2022/017845
(87) International publication number: WO 2023/106666

(57) **Abstract**

A composition for forming oral appliances, a method for manufacturing oral appliances, and oral appliances manufactured by the method are disclosed. The disclosed composition for forming oral appliances includes photo-polymerizable compounds and an incomplete polymerization indicator, wherein the incomplete polymerization indicator has both photopolymerization initiation function and incomplete polymerization indication function.

## Description

### [Technical Field]

The present invention relates to a composition for forming an oral appliance, a method of preparing the oral appliance, and the oral appliance prepared thereby. More specifically, the present invention discloses a composition for forming an oral appliance, a method of preparing the oral appliance, and the oral appliance prepared thereby, which can easily determine the incomplete curing of 3D printing output

### [Background Technology]

For example, a transparent tooth correction device, one type of oral appliance, refers to a device that achieves the desired tooth movement by heat-pressing and shaping a transparent polymeric composite resin (hereinafter, resin). The transparent tooth correction device is attached to the teeth like a conventional orthodontic device but does not have prominent structures or metal wire, and its color is almost transparent, making it excellent in aesthetic aspects compared to conventional orthodontic devices. Therefore, many people who desire orthodontic treatment but are concerned that attaching orthodontic devices to their teeth will negatively impact their work, interpersonal relationships, and confidence choose not to undergo orthodontic treatment. The transparent tooth correction device allows these individuals to comfortably receive orthodontic treatment without the burden of such concerns. Additionally, the device is thin, making it comfortable to wear, and can be temporarily removed from the mouth for eating or brushing, significantly reducing the inconvenience in daily life. As malocclusion is very common in the population, the interest in and demand for orthodontic treatment using transparent tooth correction devices are inevitably high, and the market size related to transparent tooth correction devices is continuously expanding.

The transparent tooth correction device, commonly referred to as an aligner, achieves the planned tooth movement continuously by gradually implementing the movement of the teeth within the elastic limit of the resin when worn in the patient's oral cavity. To achieve this effect, the model of the teeth used for heat-press molding the aligner should reproduce the gradual movement pattern of the teeth. There are two methods for reproducing the gradual movement pattern of the teeth on the mold.

The first method is manual. Obtain a plaster model of the patient's dental arch, separate each tooth one by one from the acquired plaster model using a saw, consider the direction of tooth movement and the elastic limit of the resin, move the individual teeth to the appropriate positions, and then re-fix them to the acquired plaster model using adhesive or wax. Perform heat and pressure molding using the resulting plaster model as a mold. When the obtained aligner is installed in the patient's oral cavity, information about the next step of tooth movement implemented in the aligner is transmitted to the teeth through the elastic restoring force of the resin, causing tooth movement. The aligner must be worn for a sufficient time until the implemented tooth movement appears in the actual teeth (typically 16-21 hours a day, for 7-14 days or more). After that, to obtain the aligner for the next step of tooth movement, the patient's oral impression is acquired again, and a plaster model of the patient's dental arch is obtained by pouring dental plaster into it The above process is then repeated continuously to achieve the desired tooth arrangement

The second method is based on 3D scanning and 3D printing technology. Obtain a 3D image of the patient's dental arch with a scanner, simulate step-by-step tooth movement considering the desired direction of tooth movement and the elasticity of the resin using a computer program. The movement of individual teeth is implemented step by step from the initial position to the final position. Afterward, a mold for heat and pressure molding of resin is outputted using a 3D printer for each step. Heat and pressure molding is performed on the output mold to obtain an aligner for each step of tooth movement

The advantage of this over the manual method is that there is no need to repeatedly call the patient for impressions, and the step-by-step simulation of tooth movement based on the 3D image of the dental arch can be checked on the computer screen to confirm and adjust whether the tooth movement is reasonably set in advance. Therefore, communication between the patient and the doctor, or the doctor and the company providing the service, about the final treatment results and the treatment process is possible, preventing errors that may occur in advance. Invisalign (Align Technology) is a representative service of this method.

As mentioned earlier, transparent orthodontic devices are highly attractive to those seeking orthodontic treatment due to their aesthetics and user convenience compared to conventional wire braces. However, existing transparent orthodontic devices were made in an incompletely cured state, causing resin leakage when attached to the patient's teeth, giving the patient an unpleasant taste, and having issues such as not meeting the target properties due to low strength.

### [Technical Challenges]

One embodiment of the present invention provides a composition for forming an oral appliance for easily determining the incomplete curing of 3D printing output

Another embodiment of the present invention provides a method for manufacturing an oral appliance, including the step of producing a composition for forming an oral appliance.

Yet another embodiment of the present invention provides an oral appliance produced by the method for manufacturing an oral appliance.

### [Technical Solution]

One aspect of the present invention includes a composition for forming an oral appliance that comprises photocurable compounds and incomplete curing indicators.

The incomplete curing indicator has both photocuring initiation function and incomplete curing indication function.

The incomplete curing indicator may include bis(2,4,6-trimethylbenzoyl)-phenylphosphineoxide, phenylglyoxylic acid methyl ester, and 2,4,6-trimethylbenzoyl-diphenyl-phosphineoxide.

The composition for forming an oral appliance may include, relative to 100 parts by weight of the photocurable compound, 0.5 to 14 parts by weight of bis(2,4,6-trimethylbenzoyl)-phenylphosphineoxide, 0.5 to 8 parts by weight of phenylglyoxylic acid methyl ester, and 0.5 to 8 parts by weight of 2,4,6-trimethylbenzoyl-diphenyl-phosphineoxide.

The composition for forming an oral appliance may not include a separate photoinitiator.

The composition for forming an oral appliance may further include 0.1 to 2 parts by weight of an antioxidant relative to 100 parts by weight of the photocurable compound.

The composition for forming an oral appliance may not include pigments.

The composition for forming an oral appliance may not include solvents.

The composition for forming an oral appliance may have a viscosity of 300 to 800 cps.

The composition for forming an oral appliance may be liquid, photocurable, and suitable for 3D printing.

Another aspect of the present invention provides a method for manufacturing an oral appliance, comprising the steps of:
producing the composition for forming an oral appliance;
3D printing the composition for forming an oral appliance to manufacture a partially cured oral appliance;
and fully curing the partially cured oral appliance to manufacture a final oral appliance.

Yet another aspect of the present invention provides an oral appliance produced by the method for manufacturing an oral appliance.

The oral appliance may be an artificial tooth, a transparent tooth correction device, a surgical guide, or a splint.

### [Advantages of the Invention]

One embodiment of the present invention provides a composition for forming an oral appliance that can easily determine the incomplete curing, thereby providing fully cured oral appliances with excellent properties such as strength.

### [Brief Explanation of the Drawing]

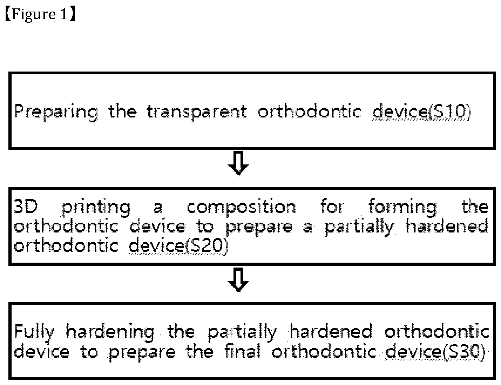

Figure 1 is a flowchart illustrating a method for manufacturing an oral appliance according to one embodiment of the present invention.

### [Best Mode for Carrying Out the Invention]

Including photocurable compounds and an incomplete curing indicator,
the incomplete curing indicator provides a composition for forming an oral appliance that has both photopolymerization initiation function and incomplete curing indication function,
and the incomplete curing indicator may include bis(2,4,6-trimethylbenzoyl)-phenylphosphine oxide, methylphenylglyoxylate, and 2,4,6-trimethylbenzoyl-diphenyl-phosphine oxide.

### [Mode for Carrying Out the Invention]

Hereinafter, a composition for forming an oral appliance according to one embodiment of the present invention will be described in detail.

The composition for forming an oral appliance according to one embodiment of the present invention includes photocurable compounds and an incomplete curing indicator.

The incomplete curing indicator has both photopolymerization initiation function and incomplete curing indication function. Specifically, the incomplete curing indicator may include bis(2,4,6-trimethylbenzoyl)-phenylphosphine oxide, methylphenylglyoxylate, and 2,4,6-trimethylbenzoyl-diphenyl-phosphine oxide.

The photocurable compounds are not particularly limited and can be any monomer or oligomer that can be easily determined for incomplete curing in order to achieve the purpose of the present invention, which is to facilitate the determination of incomplete curing in the manufacture of oral appliances.

For example, the photocurable compounds may include N,N-dimethylacrylamide, transferable aliphatic urethane methacrylate (e.g., Bomar BR-952), bisphenol A glycerol dimethacrylate, 3,5-di-tert-butyl-4-hydroxytoluene, or combinations thereof.

Furthermore, the composition for forming an oral appliance may include, based on 100 parts by weight of the photocurable compounds, 0.5 to 14 parts by weight of bis(2,4,6-trimethylbenzoyl)-phenylphosphine oxide, 0.5 to 8 parts by weight of methylphenylglyoxylate, and 0.5 to 8 parts by weight of 2,4,6-trimethylbenzoyl-diphenyl-phosphine oxide. If the content of bis(2,4,6-trimethylbenzoyl)-phenylphosphine oxide, methylphenylglyoxylate, and 2,4,6-trimethylbenzoyl-diphenyl-phosphine oxide is within the respective ranges, the composition for forming an oral appliance can exhibit fluorescence when incompletely cured and the fluorescence disappears when fully cured, allowing determination of the incomplete curing state by visual observation.

The composition for forming an oral appliance may not include a separate photoinitiator. In other words, bis(2,4,6-trimethylbenzoyl)-phenylphosphine oxide, methylphenylglyoxylate, and 2,4,6-trimethylbenzoyl-diphenyl-phosphine oxide can serve as indicators to determine the incomplete curing state during curing of the composition and can also act as photoinitiators, eliminating the need for a separate photoinitiator.

Additionally, the composition for forming an oral appliance may further include 0.1 to 2 parts by weight of an antioxidant based on 100 parts by weight of the photocurable compounds. If the content of the antioxidant is within the specified range, a sufficient antioxidant effect can be achieved without adversely affecting other properties of the oral appliance.

The antioxidant above is a hindered phenol compound such as 2,6-di-tert-butyl-p-cresol, 4,4'-methylenebis(6-tert-butyl-o-cresol); an aromatic amine compound such as dicyclohexylamine, phenyl-alpha-naphthylamine; sulfur compounds; phosphorus compounds; and compounds of sulfur and phosphorus, such as dialkyldithiophosphate complexes (e.g., sulfurized fats, diethylthiophosphate, dibenzylthiophosphate, alkyl dithiophosphates). It may also include di-salicylidene-diaminopropane, dodecylthiobenzimidazole, or combinations thereof.

Furthermore, the oral appliance-forming composition may not include pigments. The oral appliance-forming composition may have a viscosity of 300 to 800 cps (centipoise). In this specification, "viscosity" refers to the viscosity measured at room temperature (25 degrees Celsius) using a Brookfield DV-⊚heometer RPM (shear rate: 25/s).

The oral appliance-forming composition may not include a solvent. However, the invention is not limited thereto, and the oral appliance-forming composition may also include a solvent. The solvent may include ethanol, methanol, isopropanol, butanol, water, methylene glycol, ethylene glycol, propylene glycol, butylene glycol, neopentyl glycol, hexylene glycol, acetone, methyl ethyl ketone, ethyl acetate, butyl acetate, cyclohexanone, cyclohexane, methylene chloride, chloroform, carbon tetrachloride, trichloroethylene, perchloroethylene, methyl glycol acetate, toluene, benzene, diethyl ether, benzyl alcohol, glycerin, or combinations thereof.

The oral appliance-forming composition may further include additives such as stabilizers and plasticizers. The stabilizer may include benzophenone, oxanilide, benzotriazole, halogenated benzotriazole, triazine, or combinations thereof. The plasticizer may include glycerin, propylene glycol, polyethylene glycol, ethylene glycol, sorbitol, mannitol, or combinations thereof.

The oral appliance-forming composition may be liquid (or a suspension), photopolymerizable, and suitable for 3D printing.

Hereinafter, a method for manufacturing an oral appliance according to one embodiment of the present invention will be described in detail. Figure 1 is a flowchart illustrating a method for manufacturing an oral appliance according to one embodiment of the present invention. Referring to Figure 1, a method for manufacturing an oral appliance according to one embodiment of the present invention includes the steps of manufacturing an oral appliance-forming composition (S10), manufacturing a partially cured oral appliance by 3D printing the oral appliance-forming composition (S20), and fully curing the partially cured oral appliance to manufacture the final oral appliance (S30).

In the above steps (S10), the ratio of the photo-curable compound, bis(2,4,6-trimethylbenzoyl)-phenylphosphine oxide, methyl phenylglyoxylate, and 2,4,6-trimethylbenzoyl-diphenyl-phosphine oxide can be appropriately adjusted to obtain a fully cured oral appliance with desired properties. In the incomplete cure state, it exhibits fluorescence, while in the fully cured state, the fluorescence disappears.

The steps (S20) can be performed by a 3D printer. During the 3D printing process, the composition for forming the oral appliance is partially cured by continuously or intermittently exposing it to ultraviolet light, creating the shape of the oral appliance. In this specification, "partial curing" refers to a concept including "incomplete curing," meaning a curing rate of 40% to 90%.

In step (S30), the partially cured oral appliance is fully cured using a separate curing device to manufacture the final oral appliance. The determination of "complete curing" can be based on whether the oral appliance exhibits fluorescence, and it can be verified with a separate curing degree measurement device for cross-checking. In this specification, "complete curing" refers to a curing rate of 99% to 100%.

Subsequently, the manufacturing method of the oral appliance produced by the above method is detailed. The oral appliance, being fully cured until the fluorescence disappears, ensures high safety in use (no leaching of substances) and allows for the perfect implementation of the intended properties and shade.

The oral appliance can be artificial teeth, transparent dental correction devices, surgical guides, or splints.

Below, the invention is described with examples, but the invention is not limited to these examples.

Examples 1-1 to 1-12 and Comparative Examples 1-1 to 1-6: Manufacture of a composition for forming transparent dental correction devices

A composition for forming transparent dental correction devices was prepared, containing photo-curable compounds such as N,N-dimethylacrylamide (PP1), transferable aliphatic urethane methacrylate (Bomar BR-952) (PP2), bisphenol A glycerolate dimethacrylate (PP3), and 3,5-di-tert-butyl-4-hydroxytoluene (PP4), incomplete curing indicator bis(2,4,6-trimethylbenzoyl)-phenylphosphine oxide (ID1), phenylglyoxylate methyl ester (ID2), and 2,4,6-trimethylbenzoyl-diphenyl-phosphine oxide (ID3), and an antioxidant 2,6-di-tert-butyl-para-cresol. The materials and amounts used in each example and comparative example are shown in Table 1 below. The unit for each value in Table 1 is in parts by weight. The amounts of the incomplete curing indicator and antioxidant are percentages relative to the total weight of the four photopolymerizable compounds.

**[Table 1]**

| | | | Examples (Implemented) | | | | | | | | |
|---|---|---|---|---|---|---|---|---|---|---|---|
| | | | 1-1 | 1-2 | 1-3 | 1-4 | 1-5 | 1-6 | 1-7 | 1-8 | 1-9 |
| Photopol ymerizati on Compoun ds | PP1 | | 30 | 30 | 30 | 30 | 30 | 30 | 30 | 40 | 0 |
| | PP2 | | 50 | 50 | 50 | 50 | 50 | 50 | 50 | 40 | 50 |
| | PP3 | | 10 | 10 | 10 | 10 | 10 | 10 | 10 | 10 | 30 |
| | PP4 | | 10 | 10 | 10 | 10 | 10 | 10 | 10 | 10 | 20 |
| Incomplete Curing Indicators | | ID1 | 7 | 0.5 | 14 | 7 | 7 | 7 | 7 | 7 | 7 |
| | | ID2 | 4 | 4 | 4 | 0.5 | 8 | 4 | 4 | 4 | 4 |
| | | ID3 | 4 | 4 | 4 | 4 | 4 | 0.5 | 8 | 4 | 4 |
| Antioxidants | | | 1 | 1 | 1 | 1 | 1 | 1 | 1 | 1 | 1 |

| | | | Examples (Implemented) | | | Comparative Examples | | | | | |
|---|---|---|---|---|---|---|---|---|---|---|---|
| | | | 1-10 | 1-11 | 1-12 | 1-1 | 1-2 | 1-3 | 1-4 | 1-5 | 1-6 |
| Photopol ymerizati on Compoun ds | PP1 | | 50 | 50 | 50 | 30 | 30 | 30 | 30 | 30 | 30 |
| | PP2 | | 0 | 30 | 30 | 50 | 50 | 50 | 50 | 50 | 50 |
| | PP3 | | 30 | 0 | 20 | 10 | 10 | 10 | 10 | 10 | 10 |
| | PP4 | | 20 | 20 | 0 | 10 | 10 | 10 | 10 | 10 | 10 |
| Incomplete Curing Indicators | | ID1 | 7 | 7 | 7 | 0.2 | 16 | 7 | 7 | 7 | 7 |
| | | ID2 | 4 | 4 | 4 | 4 | 4 | 0.2 | 10 | 4 | 4 |
| | | ID3 | 4 | 4 | 4 | 4 | 4 | 4 | 4 | 0.2 | 10 |
| Antioxidants | | | 1 | 1 | 1 | 1 | 1 | 1 | 1 | 1 | 1 |

### Manufacturing of Transparent Dental Correction Devices in Examples 2-1~2-12 and Comparative Examples 2-1-2-6

Transparent dental correction devices produced in each of the aforementioned examples and comparative examples were 3D printed using a 3D printer and partially cured to manufacture partially cured transparent dental correction devices. Subsequently, the partially cured transparent dental correction devices were fully cured using a curing device to produce the final transparent dental correction devices. The 3D printer and curing device used were manufactured as a set by Ray Dent Studio. The complete curing was determined using a separate curing degree measurement device. Three transparent dental correction devices were manufactured using the composition for forming each transparent dental correction device.

### Evaluation Example: Assessment of Incomplete Curing of Transparent Dental Correction Devices

In each of the aforementioned examples and comparative examples, the color of the partially cured transparent dental (DV1) and the fully cured final transparent dental correction devices (DV2) printed with a 3D printer and cured using a curing device was observed, and the results are presented in Table 2 below. In the table, "o" indicates fluorescence, while "×" indicates no fluorescence.

**[Table 2]**

| | | Examples (Implemented) | | | | | | | | |
|---|---|---|---|---|---|---|---|---|---|---|
| | | 2-1 | 2-2 | 2-3 | 2-4 | 2-5 | 2-6 | 2-7 | 2-8 | 2-9 |
| Fluores cent Color | DV1 | ○ | ○ | ○ | ○ | ○ | ○ | ○ | ○ | ○ |
| | DV2 | × | × | × | × | × | × | × | × | × |

| | | Examples (Implemented) | | | Comparative Examples | | | | | |
|---|---|---|---|---|---|---|---|---|---|---|
| | | 2-10 | 2-11 | 2-12 | 2-1 | 2-2 | 2-3 | 2-4 | 2-5 | 2-6 |
| Fluores cent Color | DV1 | ○ | ○ | ○ | × | × | × | × | × | × |
| | DV2 | × | × | × | × | × | × | × | × | × |
| | | | | | | | | | | |

Referring to Table 2 above, in Examples 2-1 to 2-12, the transparent dental correction device exhibits fluorescence in an incomplete curing state and does not exhibit fluorescence in a complete curing state. This allows the operator to easily determine whether the output of the 3D printer has completely cured when subsequently cured with a curing device through visual observation. Therefore, the problem of the operator completing the production of the transparent dental correction device in an incomplete curing state when subsequently cured can be prevented in advance. Additionally, the incomplete curing determination function of the incomplete curing indicator appears to be maintained even if the composition of the photocurable compound changes.

On the other hand, in Comparative Examples 2-1 to 2-6, there is no apparent difference in appearance between the transparent dental correction device in an incomplete curing state and one in a cured state. This makes it difficult for the operator to accurately determine the complete curing status, leading to the completion of production in an incomplete curing state. This may result in facing issues due to incomplete curing or require the confirmation of complete curing using a separate curing degree measurement device, making the manufacturing process complex and increasing production time, significantly reducing productivity.

In conclusion, while desirable embodiments according to the drawings and examples have been described, it should be understood that these are merely exemplary. Those skilled in the art will recognize various modifications and alternative embodiments within the scope of the appended claims. Therefore, the scope of protection of the present invention should be determined by the attached claims.

### [Industrial Applicability]

The composition for forming an oral appliance according to the present invention can easily determine incomplete curing and is expected to be widely used in the orthodontic industry utilizing transparent dental correction devices, ensuring sufficient strength of the transparent correction device and preventing leakage of the output material from the device.

## Claims

1. A composition for forming an oral appliance comprising photopolymerizable compounds and an incomplete curing indicator,
wherein the incomplete curing indicator is a composition for forming an oral appliance that has both photopolymerization initiation function and incomplete curing indication function.

2. The composition according to claim 1,
wherein the incomplete curing indicator includes bis(2,4,6-trimethylbenzoyl)-phenylphosphine oxide, phenylglyoxylic acid methyl ester, and 2,4,6-trimethylbenzoyl-diphenyl-phosphine oxide.

3. The composition according to claim 2,
wherein the composition includes, based on 100 parts by weight of the photopolymerizable compound, 0.5 to 14 parts by weight of bis(2,4,6-trimethylbenzoyl)-phenylphosphine oxide,
0.5 to 8 parts by weight of phenylglyoxylic acid methyl ester, and 0.5 to 8 parts by weight of 2,4,6-trimethylbenzoyl-diphenyl-phosphine oxide.

4. The composition according to claim 1,
wherein the composition does not include a separate photoinitiator.

5. The composition according to claim 1,
wherein the composition further includes, based on 100 parts by weight of the photopolymerizable compound, an antioxidant in the range of 0.1 to 2 parts by weight

6. The composition according to claim 1,
wherein the composition does not include pigments.

7. The composition according to claim 1,
wherein the composition does not include solvents.

8. The composition according to claim 1,
wherein the composition has a viscosity of 300 to 800 cps.

9. The composition according to claim 1,
wherein the composition is a liquid, photopolymerizable, 3D printing composition.

10. The method for manufacturing an oral appliance (S10) according to any one of claims 1 to 9 comprising the steps of:
manufacturing a partially cured oral appliance by 3D printing the composition for forming an oral appliance (S20); and
fully curing the partially cured oral appliance to manufacture the final oral appliance (S30).

11. An oral appliance manufactured by the method for manufacturing an oral appliance according to claim 10.

12. The oral appliance according to claim 11,
wherein the oral appliance is an artificial tooth, a transparent tooth alignment device, a surgical guide, or a splint-type oral appliance.
